# EUROPEAN PATENT APPLICATION

(11) **EP 2 015 524 A1**
(43) Date of publication of application: **14.01.2009**
(21) Application number: 07720901.3
(22) Date of filing: 23.04.2007
(51) Int. Cl.: H04L 12/56, H04Q 7/38

(54) **METHOD AND DEVICE FOR HANDLING GUARANTEED BIT RATE SERVICE BEARER IN EVOLUTION NETWORK**

(30) Priority: 01.05.2006 CN 200610060646
(71) Applicant: Huawei Technologies Co., Ltd., Longgang District, Shenzhen, Guangdong 518129 (CN)
(72) Inventor: WANG, Zongjie, Guangdong 518129 (CN); DENG, Yongfeng, Guangdong 518129 (CN); YANG, Xudong, Guangdong 518129 (CN); YU, Chengyu, Guangdong 518129 (CN)
(74) Representative: Thun, Clemens
(86) International application number: PCT/CN2007/001328
(87) International publication number: WO 2007/124682

(57) **Abstract**

The present invention puts forward a method for processing a Guaranteed Bit Rate (GBR) service bearer in an evolving network, including: the information on the service bit rate parameter is added into the request of creating or modifying a service; an AGW requests to create or modify a service bearer, with the information on the service bit rate parameter carried in the request of creating or modifying a service bearer. The eNB determines the radio resources according to the service bit rate parameter; and creates or modifies a service bearer that is in a mapping relation with the radio resources. The present invention adds the information on the service bit rate parameters (for example, MBR, GBR) into the service creation or modification request, and invokes the bit rate parameter in the process of creating or modifying a service bearer, thus realizing creation or modification of a bearer for the GBR services (such as voice communication and video communication) in an evolving network.

## Description

This application claims priority to Chinese Patent Application No. 200610060646.4, filed with the Chinese Patent Office on May, 01, 2006, entitled "Method for Establishing and Modifying a GBR Service Bearer in an Evolving Network", contents of which are incorporated herein by reference in its entirety.

### Field of the Invention

The present invention relates to the field of mobile communication evolving network technologies, and in particular to a method and an apparatus for processing Guaranteed Bit Rate (GBR) services in an evolving network.

### Background of the Invention

A Universal Mobile Telecommunications System (UMTS) is a third generation (3G) mobile communication system which employs Wideband Code Division Multiple Access (WCDMA) air interface technology. Generally, a UMTS is also referred to as a WCDMA communication system.

A UMTS has a structure similar to that of a second generation (2G) mobile communication system, and includes a Radio Access Network (RAN) and a Core Network (CN). The RAN is adapted to handle all radio-related functions; and the CN is adapted to handle all voice calls and data connections in the UMTS and implement switching and routing with an external network. The CN is logically divided into a Circuit Switched (CS) domain and a Packet Switched (PS) domain. A RAN, a CN and User Equipments (UE) make up a whole UMTS.

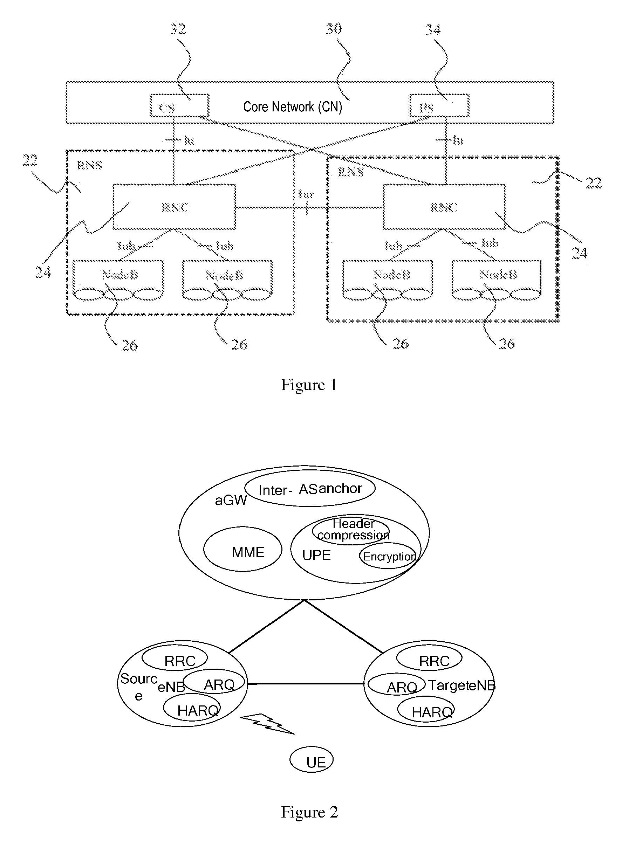

Figure 1 shows a schematic diagram of a framework of a UMTS Territorial Radio Access Network (UTRAN). The UTRAN includes one or more Radio Network Subsystems (RNSs) 22. The RNS 22 includes a Radio Network Controller (RNC) 24 and one or more base stations (NodeBs) 26. The RNC 24 is communicated with a CN 30 through an Iu interface; the NodeB 26 is connected to the RNC 24 through an Iub interface. Within the UTRAN, the RNCs 24 are interconnected through an Iur interface. The Iur interface provides connection through a direct physical connection or a transport network between the RNCs 24. The RNC 24 is adapted to allocate and control radio resources of the NodeBs 26 connected or related to the RNC 24. The NodeB 26 converts data streams between an Iub interface and an Iu interface, and participates in radio resources management.

The NodeB 26 is a base station of a WCDMA system, and includes of a radio transceiver and a baseband processing component. The NodeB 26 is connected to the RNC 24 through a standard Iub interface, and is adapted to perform physical layer protocol processing of the Iu interface. The functions of the NodeB 26 include: spectrum spreading, modulation, channel encoding and despreading, demodulation, channel decoding, and conversion between a baseband signal and a Radio Frequency signal etc.

The RNC 24 is adapted to control radio resources of the UTRAN, and the functions of the RNC24 include: connection setup and disconnection, handover, macro diversity combining, and radio resource management etc.

The previous network architecture is based on the versions earlier than 3^{rd} Generation Partnership Project (3GPP) R6. Currently, the 3GPP organization is doing a research on a brand-new evolving network architecture which is all IP-based and provides low delay, high data rate, high system capacity and coverage, and low cost. To realize the brand-new network architecture of an evolving network, all nodes, functions and processes of the existing architecture will change substantially.

The 3GPP provides a Long Term Evolution (LTE) network. As shown in Figure 2, in the LTE network, the architecture of the access network part evolves from the two-node architecture of a 3G network which includes NodeBs and RNCs to the one-node (eNB) architecture which includes evolved NodeBs (eNB). An eNB is an evolution of a NodeB, and provides a majority of the functions of a RNC. An Access Gateway (AGW) provides most functions or function combinations of the nodes of a core network, for example, Serving GPRS Support Node (SGSN), or Gateway GPRS Support Node (GGSN). The functions of an outer Automatic-Repeat Request (ARQ) are performed primarily by an eNB.

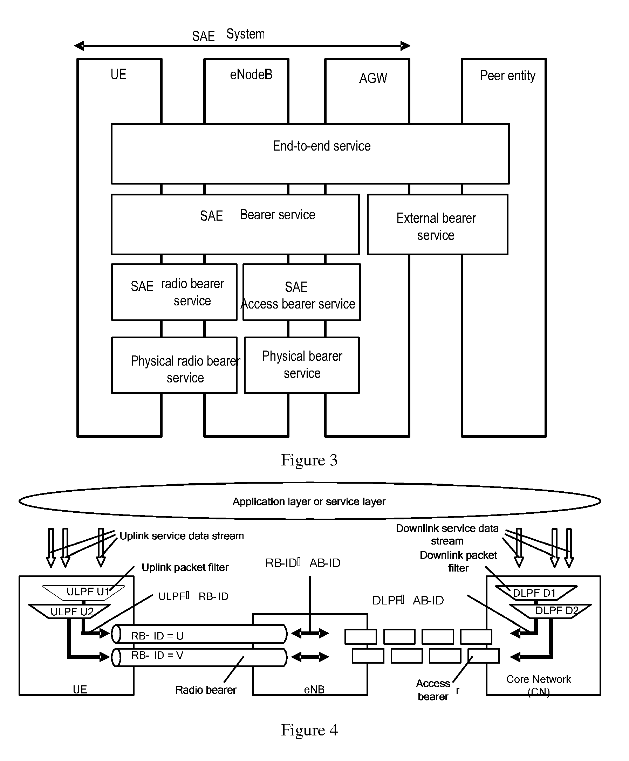

As shown in Figure 3, the Quality of Service (QoS) architecture of an evolving network may perform end-to-end services from a UE to a peer entity. This end-to-end service includes two parts: System Architecture Evolution (SAE) bearer service from the UE to an evolving core network, and external bearer service from the evolving core network to the peer entity. The SAE bearer service implements service setup or data transfer from the UE to the evolving core network, including the corresponding SAE radio bearer service from the UE to the air interface radio bearer of an eNB, and the corresponding SAE access bearer service from the eNB to the evolving core network AGW.

Figure 4 shows a schematic diagram of the SAE bearer service architecture. The SAE bearer is correlated with the QoS class. One SAE bearer may be mapped to SAE radio bearer and SAE access bearer. Uplink service data streams are connected from the application or service layer to the Up Link Packet Filters (ULPF) U1 and U2 at the UE side. A service data stream is an aggregate of packet streams, and several packet streams make up a service data stream. A packet filter performs filtering based on data packets, aggregates the packet streams of the same QoS class in the service data stream, and binds the uplink service of the service data stream to the SAE bearer. According to the mapping relationship between the packet filter and the radio bearer identity (RB-ID), the packet filter splits a packet stream into two SAE radio bearers, and sets up a communication link with the eNB. The downlink service data streams are connected from the application or service layer to the Down Link Packet Filters (DLPF) D1 and D2 of the core network. The Down Link Packet Filters (DLPF) D1 and D2 aggregate the packet streams of the same QoS class in the downlink service data stream. Through the mapping relationship between the packet filter and the access bearer identity (AB-ID), the downlink packet filter splits a packet stream into two SAE access bearers according to the QoS class of the stream, and sets up a communication link with the eNB. The eNB sets up a mapping between the RB-ID and the AB-ID, and implements data switching between the radio bearer and the access bearer.

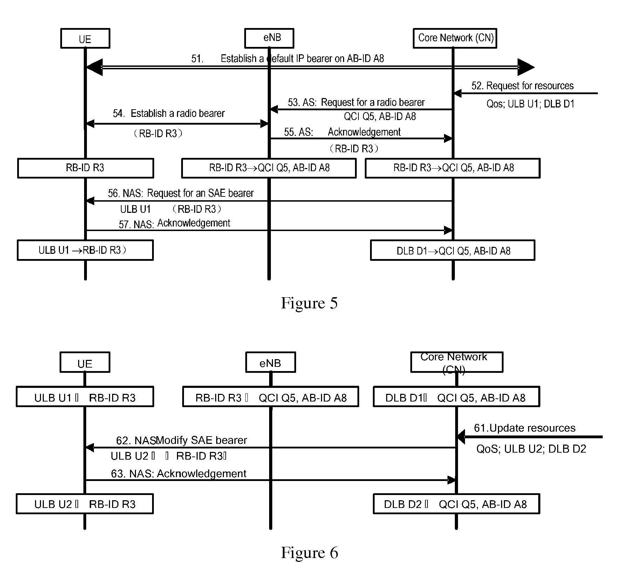

Figure 5 shows a schematic flow chart of the process of establishing an SAE bearer in the prior art. In step 51, the evolving core network negotiates with the UE to establish a default IP bearer, namely, an SAE bearer of Non-Guaranteed Bit Rate (Non-GBR). The AB-ID of the SAE bearer of Non-GBR is A8. In step 52, the upper-layer network sends a resource request to the evolving core network. The resource request carries the QoS information, the uplink binding type U1, and the downlink binding type D1. The evolving core network maps the received QoS information to the information such as Quality Classification Indicator (QCI) Q5 etc. Actually, the QCI is an index directed to the parameter list stored in the upper-layer network. The resource request carries this index, and transmits the index to the eNB transparently. Therefore, the eNB can determine the current parameters according to the indexed parameter list, and establish a radio bearer. The uplink binding type and the downlink binding type correspond to different packet filters. A different packet filter can be determined by selecting a different binding type in order to filter out the corresponding packet streams from the service data streams. In step 53, the evolving core network sends a request of establishing a radio bearer to the eNB. The request of establishing the radio bearer carries a QCI Q5 and an AB-ID A8. The eNB invokes the relevant parameters according to the QCI to determine the RB-ID R3, and establishes a mapping relation between the AB-ID and the RB-ID. In step 54, the radio bearer is established between the eNB and the UE according to the RB-ID R3. Upon completion of establishing the bearer, step 5 is performed, and an acknowledgement message that carries the RB-ID of the radio bearer is returned to the core network. The UE, the eNB and the evolving core network confirm their respective parameters. The UE uses the radio bearer RB-ID R3 and the eNB to establish a mapping relation between the RB-ID R3, the QCI Q5 and the AB-ID A8. The evolving core network sets up a mapping relation between the RB-ID R3, the QCI Q5 and the AB-ID A8. Afterward, in step 56, the evolving core network sends an SAE bearer request to the UE through a Non Access Stratum (NAS). This SAE bearer request sets up a mapping relation between the uplink binding type U1 and the RB-ID R3. In step 57, the UE returns an acknowledgement message to the evolving core network through a NAS. By now, the UE has established a mapping relation between the uplink binding type and the RB-ID R3; and the evolving core network has established a mapping relation between the downlink binding type, the QCI Q5, and the AB-ID A8 successfully.

Figure 6 shows a schematic flow chart of the process of modifying an SAE bearer for non-GBR services in the prior art. After an SAE bearer is established, for example, if the SAE bearer needs to be modified due to change of the service, step 61 will be performed. The upper-layer network sends a command of updating resources to the core network. The command carries the QoS parameter information, the uplink binding type U2, and the downlink binding type D2. The evolving core network maps the received QoS information to the information of QCI etc. The QCI is the same as the QCI of the old service, but the uplink binding type and the downlink binding type is changed. Namely, a new packet filter is used to operate the service data stream. In step 62, the core network modifies the SAE bearer through a NAS command, and requires to establish a mapping relation between the uplink binding type U2 and the radio bearer RB-ID R3 established previously. In step 63, the UE returns an acknowledgement message. By now, a mapping relation has been established between the uplink binding type U2 and the RB-ID R3; and a mapping relation has been established between the downlink binding type D2, the QCI Q5 and the AB-ID A8.

The prior art can be used for establishing and modifying an SAE bearer of non-GBR services. However, more GBR services, such as voice communication and video services, are applied in the practice. The process of establishing an SAE bearer in the prior art is inapplicable to the process of establishing an SAE bearer of GBR services.

### Summary of the Invention

An embodiment of the invention provides a method for establishing or modifying a GBR service bearer to overcome the weaknesses of the prior art.

The method for processing a GBR service bearer in an evolving network in an embodiment of the invention includes:
sending, by an evolving core network, a service bearer setup or modification request to an evolving access network, with the information on a service bit rate parameter carried in the service bearer setup or modification request;
determining, by the evolving access network, radio resources through negotiation with the UE according to the service bit rate parameter; and
establishing or modifying a service bearer that is in a mapping relation with the radio resources.

The apparatus for processing a GBR service bearer in an evolving network in an embodiment of the invention includes:
a service bearer request unit, adapted to send a service bearer setup or modification request to an evolving access network, with the information on a service bit rate parameter carried in the service bearer setup or modification request;
a service bearer response unit, adapted to receive the service bearer setup or modification response from the evolving access network, with the response carrying radio resources determined according to the information on the service bit rate parameter; and
a bearer establishing or modifying unit, adapted to establish or modify a service bearer that is in a mapping relation with the radio resources.

An apparatus for processing a GBR service bearer in an evolving network in an embodiment of the invention includes:
a service bearer request receiving unit, adapted to receive a service bearer setup or modification request from an evolving core network, with the information on the service bit rate parameter carried in the service bearer setup or modification request;
a resource allocating unit, adapted to determine radio resources according to the bit rate parameter, and send the radio resources to the evolving core network through a service bearer setup or modification response; and
a service bearer unit, adapted to establish or modify the service bearer that is in a mapping relation with the radio resources.

The embodiments of the invention add the information of the service bit rate parameter into the service setup or modification request, and invoke the bit rate parameter in the process of establishing or modifying a service bearer, thus realizing setup or modification of a bearer for the GBR services in an evolving network, such as voice communication and video communication.

### BRIEF DESCRIPTION OF THE DRAWINGS

Figure 1 is a schematic diagram of a framework of an UMTS Terrestrial Radio Access Network (UTRAN) in the prior art;

Figure 2 is a schematic diagram of the two-node architecture of an evolving network in the prior art;

Figure 3 is a schematic diagram of the QoS architecture of an evolving network in the prior art;

Figure 4 is a schematic diagram of the SAE bearer service architecture in the prior art;

Figure 5 is a schematic flow chart of a method for establishing an SAE bearer in the prior art;

Figure 6 is a schematic flow chart of a method for modifying an SAE bearer in the prior art;

Figure 7 is a schematic flow chart of a methodf for establishing or modifying a GBR service bearer in an embodiment of the invention;

Figure 8 is a schematic flow chart of a method for establishing or modifying a service through simplified signaling without QoS parameter negotiation according to an embodiment of the invention;

Figure 9 is a schematic flow chart of a method for modifying an existing QoS class in an embodiment of the invention;

Figure 10 is a schematic diagram of the structure of a system for establishing or modifying a GBR service bearer according to the first embodiment of the invention; and

Figure 11 is a schematic diagram of the structure of a system for establishing or modifying a GBR service bearer according to the second embodiment of the invention.
Detailed Description of the Embodiments

In an embodiment of the invention, a method for establishing or modifying a GBR service bearer in an evolving network includes: adding the information on the service bit rate parameter into the request of establishing or modifying a service; and requesting, by an AGW, radio resources from an eNB, with the information on the service bit rate parameter carried in the radio resource request; instructing, by the eNB a UE to configure or modify the service bearer; responding by the eNB, to the service bearer configuration or modification request, and returning an acknowledgement to an evolving core network; sending by the evolving core network, a NAS command to request the UE to establish or modify the SAE bearer; responding by the UE, to the NAS command to request the UE to establish or modify the SAE bearer, and returning an acknowledgement through a NAS command.

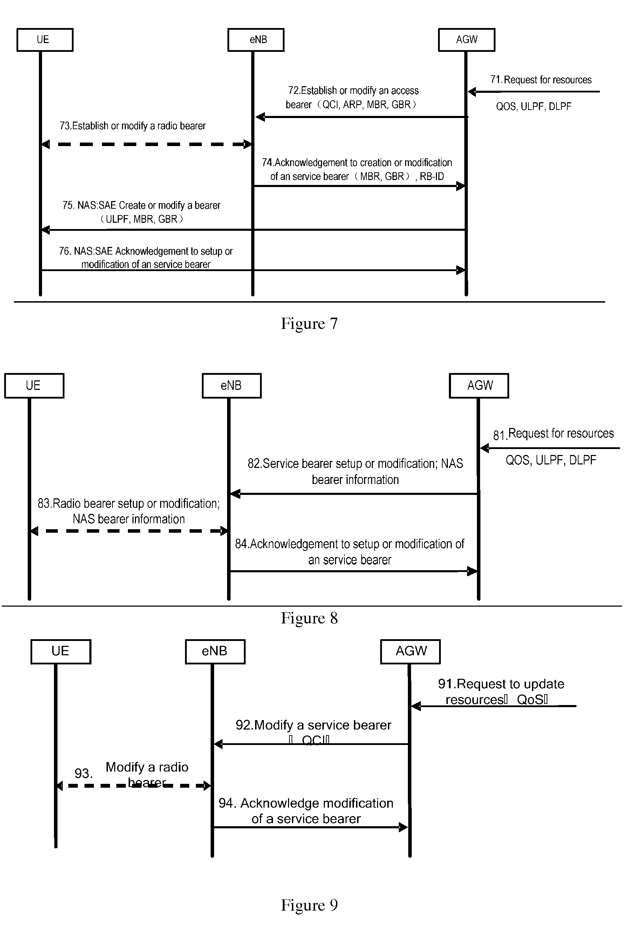

Figure 7 shows a schematic flow chart of a method for establishing or modifying a GBR service bearer in an evolving network according to an embodiment of the invention. In step 71, the evolving core network AGW receives a QoS request of establishing a service bearer. The request carries the QoS parameters, the uplink binding type, and the downlink binding type. The AGW may map the QoS parameters to such parameters as QCI, Assorted Reservation Priority (ARP), Maximum Bit Rate (MBR), and Guaranteed Bit Rate (GBR), or a candidate list of MBR and GBR. In this embodiment, the QCI is a QoS category indicator.The ARP is a parameter indicative of service priority to perform differentiated operations for the services of different priorities, and to handle the service of higher priority first. The MBR is the maximum possible bit rate of the service, and GBR is the minimum bit rate required for establishing thea service. The uplink binding type and the downlink binding type correspond to the uplink packet filter at the UE side and the downlink packet filter at the core network side respectively. In step 72, the AGW sends a service bearer setup request to the eNB, and transparently transmits the parameters such as QCI, ARP, MBR and GBR through the service bearer setup trequest. If the current channel resources are not enough for fulfilling the parameters such as MBR and GBR required by the service bearer setup request, the eNB and the AGW negotiate the parameters; after the new parameters which are fulfilled by the current channel resources are determined by the negotiation, the procedure goes to step 73. If the current channel resources are enough for fulfilling the parameters required by the service bearer setup request, the procedure goes to step 73 directly. In step 73, the eNB instructs the UE to configure a radio bearer according to the parameters determined in step 72, and determine the RB-ID to be used by the radio bearer. In step 74, the eNB sends a radio bearer setup response to the AGW, and returns to the core network the parameters, such as MBR and GBR applicable in configuring a radio bearer and the RB-ID. In step 75, the evolving core network sends an SAE bearer setup request to the UE through a NAS command. The request carries the currently used parameters such as MBR and GBR, the RB-ID, and the uplink binding type. Therefore, a mapping relation is established between the uplink packet filter and the RB-ID. In step 76, the UE returns an acknowledgement about successful setup of the SAE bearer through a NAS command.

Accordingly, in step 71 for modifying a GBR service bearer, the evolving core network AGW receives the QoS request of modifying a service. Corresponding to the process of establishing a GBR service bearer, this request also carries QoS parameters, the uplink binding type and the downlink binding type of the corresponding new packet filter. The AGW may map the QoS parameters to such parameters as existing QoS Classification Indicator (QCI), ARP, MBR and GBR, or to a candidate list of MBR and GBR. In step 72, the AGW sends a service bearer modification request to the eNB, and transparently transmits the parameters such as QCI, ARP, MBR and GBR through the service bearer modification request. If the current channel resources are not enough for fulfilling the parameters such as MBR and GBR required by the service bearer modification request, the eNB and the AGW will negotiate the new parameters; after the new parameters which are fulfilled by the current channel resources are determined by the negotiation, the procedure goes to step 73. If the current channel resources are enough for fulfilling the parameters required by the service bearer modification request, the procedure goes to step 73 directly. In step 73, the eNB instructs the UE to modify a radio bearer according to the parameters determined in step 72, and determine the RB-ID to be used by the modified radio bearer. In step 74, the eNB sends a service bearer modification response to the AGW, and returns to the core network the parameters (such as MBR and GBR) applicable in configuring a radio bearer and the RB-ID. In step 75, the evolving core network sends an SAE bearer modification request to the UE through a NAS command. The request carries the currently used parameters such as MBR and GBR, the RB-ID, and the uplink binding type of the corresponding new uplink packet filter. Therefore, a mapping relation is established between the new uplink packet filter and the RB-ID. In step 76, the UE returns an acknowledgement about successful modification of the SAE bearer to the evolving core network.

Figure 8 is a schematic flowchart of a method for establishing or modifying a service through simplified signaling without QoS parameter negotiation. This process is applied in a network where the eNB is incapable of parameter negotiation. In step 81, the evolving core network receives the QoS request of establishing or modifying a service bearer. This request carries the QoS parameters, the uplink binding type and the downlink binding type. The evolving core network maps the QoS parameters to such parameters as QCI, ARP, MBR and GBR. In step 82, the evolving core network indicates the parameters such as QCI, MBR and GBR, requests the access network to establish a radio bearer or modify the relevant bearer parameters. Meanwhile, the evolving core network attaches the NAS-layer configuration parameters to the access-layer signaling sent to the eNB. The NAS-layer configuration parameters carry an uplink binding type. In step 83, the eNB instructs the UE to create a bearer according to the radio bearer parameters and the NAS-layer configuration parameters, determines the uplink packet filter in the UE according to the uplink binding type in the NAS layer information, and establishes a mapping relation between the packet filter and the RB-ID. Alternatively, the eNB and the UE modify the current radio bearer, and establish a mapping relation between the new uplink filter and the RB-ID according to the uplink binding type in the NAS-layer information. In step 84, after completion of creating or modifying the bearer, the eNB sends a service bearer creation or modification acknowledgement to the evolving core network.

Figure 9 shows a schematic flow chart of a method for modifying the QoS class of an existing service after the QoS bearer required by the service is established. Since the SAE bearer is interrelated with the QoS class, the modification of the QoS class of a service makes it necessary to adjust the corresponding SAE bearer. In step 91, the evolving core network receives the request of modifying a QoS class. According the request of modifying a QoS class, the evolving core network determines the QoS Classification Indication (QCI) parameter. The QCI indicates the modified QoS class to the evolving core network. In step 92, the evolving core network indicates the QCI parameter, and requests bearing from the eNB. If the current channel resources are not enough for fulfilling the requirements of the new QCI parameter, the eNB and the evolving core network will negotiate the QCI parameter, and update the QCI parameter according to the negotiation result. In step 93, the eNB instructs the UE to configure and modify the radio bearer. After completion of configuring and modifying, the eNB performs step 94, and returns a modification acknowledgment to the evolving core network, with the new QCI parameter carried in the acknowledgement.

It is understandable to those skilled in the art that all or part of steps of the preceding embodiments can be implemented by hardware following instructions of programs. The programs may be stored in a computer readable storage medium. When the programs are executed, the process includes all or part of the steps of the preceding embodiments. The storage medium mentioned above may be a Read-Only Memory (ROM), Random Access Memory (RAN), disk or CD.

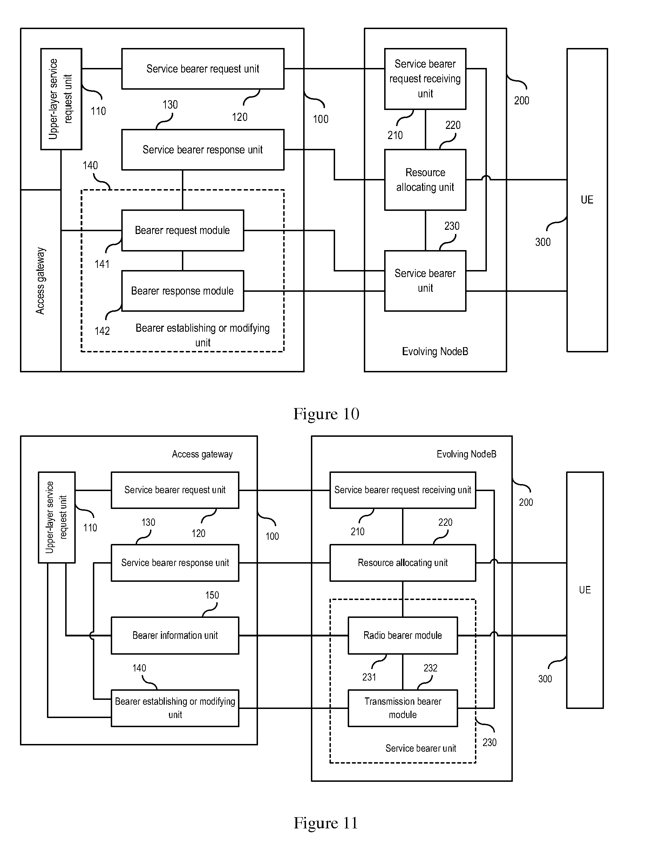

The structure of a system for establishing or modifying a GBR service bearer according to the first embodiment of the invention is exemplified in Figure 10. In the system, an AGW 100 includes a service bearer request unit 120, a service bearer response unit 130, and a bearer establishing or modifying unit 140, and optionally, an upper-layer service request unit 110; and an evolving NodeB 200 includes a service bearer request receiving unit 210, a resource allocating unit 220, and a service bearer unit 230; the system further includes a UE 300.

The upper-layer service request unit 110 of the AGW 100 receives the QoS request of establishing or modifying a service, and this request carries the QoS parameters, uplink binding type and downlink binding type. The upper-layer service request unit 110 maps the QoS parameters to the service bit rate parameters and other parameters. The service bearer request unit 120 sends a service bearer setup or modification request to the service bearer request receiving unit 210 of the evolving NodeB 200, with the information on the service bit rate parameter carried in the request. The service bearer request receiving unit 210 of the evolving NodeB 200 outputs the information such as bit rate parameter to the resource allocating unit 220. The resource allocating unit 220 determines the radio resources according to the service bit rate parameter and the UE 300, and sends the determined radio resources to the service bearer response unit 130 of the AGW 100 through a service bearer setup or modification response. The resource allocating unit 220 may include a parameter negotiating module. When an evolving access network is unable to fulfill the requirements of the service bit rate parameter, the parameter negotiating module and the AGW 100 negotiate and determine the new service bit rate parameter. The resource allocating unit 220 sends the updated service bit rate parameter to the service bearer response unit 130 of the AGW 100 through a service bearer setup or modification response. The service bearer response unit 130 of the AGW 100 outputs the determined radio resources to the bearer establishing or modifying unit 140. Through the service bearer unit 230 of the evolving NodeB 200, the bearer establishing or modifying unit 140 creates or modifies the service bearer that is in a mapping relation with the radio resource.

In this embodiment, the bearer establishing or modifying unit 140 may include a bearer request module 141 and a bearer response module 142. The bearer request module 141 obtains the uplink binding type from the upper-layer service request unit 110; through an evolving NodeB 200, the bearer request module sends an SAE bearer setup or modification request to the UE 300, with the uplink binding information carried in the request; according to the uplink binding information, the bearer request module 141 establishes or modifies the service bearer that is in a mapping relation with the radio resources received from the service bearer response unit 130 . The bearer response module 142 receives the SAE bearer setup or modification response from the UE 300.

The structure of a system for establishing or modifying a GBR service bearer according to the second embodiment of the invention is exemplified in Figure 11. In the system, an AGW 100 includes a service bearer request unit 120, a service bearer response unit 130, a bearer establishing or modifying unit 140, and a bearer information unit 150, and optionally, an upper-layer service request unit 110; an evolving NodeB 200 includes a service bearer request receiving unit 210, a resource allocating unit 220, and a service bearer unit 230; the system further includes a UE 300.

The upper-layer service request unit 110 of the AGW 100 receives the QoS request of establishing or modifying a service, and this request carries the QoS parameters, uplink binding type and downlink binding type. The upper-layer service request unit 110 maps the QoS parameters to the service bit rate parameters and other parameters. The service bearer request unit 120 sends a service bearer setup or modification request to the service bearer request receiving unit 210 of the evolving NodeB 200. This service bearer setup or modification request carries the information on the service bit rate parameter, and optionally, the downlink binding type information. The bearer information unit 150 obtains the uplink binding type information from the upper-layer service request unit 110, puts the uplink binding type into the NAS-layer bearer information, and sends the information to service bearer unit 230 of the evolving NodeB 200. The service bearer request receiving unit 210 of the evolving NodeB 200 outputs the information such as bit rate parameter to the resource allocating unit 220. The resource allocating unit 220 determines the radio resources according to the service bit rate parameter and the UE 300, sends the determined radio resources to the service bearer response unit 130 of the AGW 100 through a service bearer setup or modification response, and outputs the determined radio resources to the service bearer unit 230.

The service bearer unit 230 of the evolving NodeB 200 is responsible for establishing or modifying the service bearer that is in a mapping relation with the determined radio resources. The service bearer unit 230 in this embodiment may include a radio bearer module 231 and an access bearer module 232. The radio bearer module receives the uplink binding type information from the bearer information unit 150 in the AGW 100, and the radio resources determined by the resource allocating unit 220; according to the uplink binding type information, the radio bearer module negotiates with the UE 300 to establish or modify a radio bearer, wherein the radio bearer is in a mapping relation with the radio resources. The bearer establishing or modifying unit 140 of the AGW 100 obtains the downlink binding type information from the upper-layer service request unit 110; the access bearer module 232 of the evolving NodeB 200 may obtain the downlink binding type information from the service bearer request receiving unit 210. The bearer establishing or modifying unit 140 and the access bearer module 232 create or modify the access bearer according to the downlink binding type information.

The resource allocating unit 220 of the evolving NodeB 200 sends a service bearer setup or modification response to the service bearer response unit 130 of the AGW 100, with the determined radio resources carried in the response. The service bearer response unit 130 outputs the determined radio resources to the bearer establishing or modifying unit 140, so as to establish a mapping relation between the radio resource, the service bit rate parameter, and the downlink binding type information.

The embodiments of the invention adds the information on the service bit rate parameters (for example, MBR, GBR) into the service setup or modification request, and invokes the bit rate parameter in the process of establishing or modifying a service bearer to realize establishment or modification of a bearer for the GBR services (such as voice communication and video communication) in an evolving network.

It should be appreciated that the previous are only preferred embodiments of the invention while not limit the invention. Any modification, equivalent substitution, and improvement without departing from the principle of this invention should be covered in the protection scope of the invention.

## Claims

1. A method for processing a Guaranteed Bit Rate,GBR service bearer in an evolving network, comprising:
sending, by an evolving core network, a service bearer setup or modification request to an evolving access network, with the information on a service bit rate parameter carried in the service bearer setup or modification request;
determining, by the evolving access network, radio resources according to the information on the service bit rate parameter; and
establishing or modifying a service bearer that is in a mapping relation with the radio resources.

2. The method of claim 1, wherein before the service bearer setup or modification request is sent to the evolving access network, the evolving core network receives a service setup or modification request and determines the service bit rate parameter according to QoS parameters in the a service setup or modification request request.

3. The method of claim 2, wherein the establishing or modifying the service bearer that is in a mapping relation with the radio resources comprises:
sending, by the evolving access network, a response to the service bearer setup or modification request of the evolving core network, with the determined radio resources carried in the radio resource response;
instructing, by the evolving core network, the UE to establish or modify the service bearer that is in a mapping relation with the radio resources.

4. The method of claim 3, wherein the determining the radio resources by the evolving access network comprises:
if the radio resources of the evolving access network are not enough for fulfilling the requirements of the service bit rate parameter, negotiating, by the evolving access network, with the evolving core network to update the service bit rate parameter;
further comprising the updated service bit rate parameter in response to the service bearer setup or modification request.

5. The method of claim 3 or claim 4, wherein:
the service bearer comprises radio bearer; and the service setup or modification request further comprises uplink binding type information; and
the instruction sent by the evolving core network to the UE about establishing or modifying an SAE bearer carries the uplink binding type information; when the UE setablishes or modifies an SAE bearer, the UE establishes a mapping relation between an uplink packet filter apparatus and the radio bearer according to the uplink binding type information.

6. The method of claim 2, wherein a service bearer comprises a radio bearer;
before the evolving access network determines the radio resources, the method further comprises:
sending, by the evolving core network, non-access layer bearer information to the evolving access network;
the establishing or modifying a service bearer that is in a mapping relation with the radio resources comprises:
sending, by the evolving access network, non-access layer bearer information to the UE, and negotiating with the UE to establish or modify the radio bearer according to the radio resources and the non-access layer bearer information.

7. The method of claim 6, wherein:
the service setup or modification request further comprises uplink binding type information;
the non-access layer bearer information comprises the uplink binding type information;
Upon establishing or modifying the radio bearer, the UE establishes a mapping relation between a uplink packet filter apparatus and the radio bearer according to the uplink binding type information in the establishing or modifying the radio bearer.

8. The method of claim 1, wherein:
a service bearer comprises an access bearer;
the service bearer setup or modification request further comprises downlink binding type information;
the evolving core network establishes a mapping relation between a downlink packet filter apparatus and the access bearer according to the downlink binding type information in the establishing or modifying the service bearer.

9. The method of claim 1, wherein the service bit rate parameters comprise a GBR parameter for establishing a service and the maximum bit rate parameter for a service, or a candidate list of the GBR parameter and the maximum bit rate parameter.

10. The method of claim 1, wherein the service bearer setup or modification request sent by the evolving core network further comprises an Assorted Reservation Priority (ARP) parameter.

11. The method of claim 6, wherein: in the case of modifying the QoS class of an existing service, the method further comprises:
receiving, by an evolving core network, a request of modifying the QoS class of a service, including a modified QoS class;
indicating, by the evolving core network, the modified QoS class to the evolving access network, and requesting to modify the service bearer; and
reallocating, by the evolving access network and the UE, the radio bearer, and responding to the service bearer modification request.

12. An apparatus for processing a GBR service bearer in an evolving network, comprising:
a service bearer request unit, adapted to send a service bearer setup or modification request to an evolving access network, with the information on a service bit rate parameter carried in the service bearer setup or modification request;
a service bearer response unit, adapted to receive the service bearer setup or modification response from the evolving access network, with the response carrying radio resources determined according to the information on the service bit rate parameter; and
a bearer establishing or modifying unit, adapted to establish or modify a service bearer that is in a mapping relation with the radio resources.

13. The method of claim 12, wherein the apparatus further comprises an upper-layer service request unit, adapted to receive a service setup or modification request and determine the service bit rate parameter according to the QoS parameters in the service setup or modification request.

14. The apparatus of claim 13, wherein:
the service setup or modification request further comprises uplink binding type information;
the bearer creating or modifying unit comprises:
a bearer request module, adapted to send an SAE bearer setup or modification request to a UE, with the uplink binding information carried in the SAE bearer setup or modification request; and establish or modify a service bearer that is in a mapping relation with the radio resources according to the uplink binding information with UE;
a bearer response module, adapted to receive the SAE bearer setup or modification response from the UE.

15. The apparatus of claim 14, wherein: if the access network is unable to fulfill the requirements of the service bit rate parameter, the service bearer setup or modification response from the evolving access network further comprises the service bit rate parameter updated through negotiation between the evolving access network and an evolving core network.

16. The apparatus of claim 13, wherein:
the service setup or modification request further comprises uplink binding type information, and a service bearer comprises a radio bearer;
the apparatus further comprises a bearer information unit, adapted to send non-access layer bearer information to the evolving access network; and the non-access layer bearer information comprises the uplink binding type information, based on which the evolving access network establishes a radio bearer.

17. The apparatus of claim 16, wherein:
the service setup or modification request further comprises downlink binding type information; a service bearer comprises an access bearer; and
the bearer establishing or modifying unit establish an access bearer with the evolving access network according to the downlink binding information.

18. The apparatus of claim 12, wherein the apparatus is an Access Gateway, AGW.

19. An apparatus for processing a GBR service bearer in an evolving network, comprising:
a service bearer request receiving unit, adapted to receive a service bearer setup or modification request from an evolving core network, with the information on the service bit rate parameter carried in the service bearer setup or modification request;
a resource allocating unit, adapted to determine radio resources according to the bit rate parameter, and send the radio resources to the evolving core network through a service bearer setup or modification response; and
a service bearer unit, adapted to establish or modify the service bearer that is in a mapping relation with the radio resources.

20. The apparatus of claim 19, wherein:
a service bearer comprises a radio bearer and an access bearer; and the radio resource request comprises the downlink binding type information;
the service bearer unit comprises:
a radio bearer module, adapted to receive non-access layer bearer information carrying uplink binding type information from the evolving core network; and, according to the uplink binding type information, establish or modify a radio bearer that is in a mapping relation with the radio resources with UE; and
an access bearer module, adapted to establish or modify an access bearer with the evolving core network according to the downlink binding type information.

21. The apparatus of claim 19, wherein the apparatus is an evolving NodeB.
